# EUROPÄISCHE PATENTSCHRIFT

(11) **EP 0 883 724 B1**
(45) Veröffentlichungstag und Bekanntmachung des Hinweises auf die Patenterteilung: **30.06.2004**
(21) Anmeldenummer: 97904992.1
(22) Anmeldetag: 20.01.1997
(51) Int. Cl.: E05F 15/00, E05F 15/16, F16P 3/12

(54) **VERSTELLANTRIEB MIT EINKLEMMSCHUTZ FÜR BEWEGLICHE TEILE**
DISPLACEMENT DRIVE FOR ANTI-PINCH CONTROL
ENTRAINEMENT VARIABLE CONTRIBUANT A EVITER LE COINCAGE

(30) Priorität: 27.02.1996 DE 19607321; 08.05.1996 DE 19618484
(43) Veröffentlichungstag der Anmeldung: 16.12.1998
(73) Patentinhaber: ROBERT BOSCH GMBH, 70442 Stuttgart (DE)
(72) Erfinder: LOCHMAHR, Gunnar, D-71229 Leonberg (DE); HEIB, Johannes, D-77830 Bühlertal (DE); AAB, Volker, D-77839 Lichtenau (DE)
(86) Internationale Anmeldenummer: PCT/DE1997/000086
(87) Internationale Veröffentlichungsnummer: WO 1997/032102

(56) Entgegenhaltungen:
- EP-A- 0 334 028
- EP-A- 0 561 361
- EP-A- 0 697 305
- EP-A- 0 751 274
- WO-A-96/27229
- DE-A- 3 736 400
- DE-A- 4 219 188
- DE-C- 3 303 590
- US-A- 5 351 439
- US-A- 5 497 326

## Beschreibung

### Stand der Technik

Die Erfindung geht aus von einem Verstellantrieb mit Einklemmschutz für bewegliche Teile, wie insbesondere Fenster und Schiebedächer in Kraftfahrzeugen, der im Oberbegriff des Anspruchs 1 definierten Gattung.

Bei einem aus der DE 37 36 400 A1 bekannten Verstellantrieb dieser Art wird zur Erfüllung einer vorgegebenen Federrate in bestimmten Verstellbereichen zur Herabsetzung der kinematischen Energie eine Drehzahl- bzw.
Geschwindigkeitsreduzierung des Antriebs vorgenommen. Das bewegliche Teil wird mittels eines Antriebsmotors über einen gefährdeten Klemmbereich, in dem Fremdkörper zwischen dem beweglichen Teil und einem ruhenden Teil einklemmbar sind, in eine Schließstellung bewegt. Wegen unvermeidlicher Verzögerung bei der Signalverarbeitung und der Trägheit des mechanisch bewegten Teils, kann trotz einer den Einklemmschutz darstellenden Sicherheitsvorrichtung der Fremdkörper zwischen dem bewegten Teil und dem ruhenden Teil eingeklemmt werden. Um dieses zu vermeiden ist bei diesem bekannten Verstellantrieb vorgesehen, daß die Verstellgeschwindigkeit beim Schließen des beweglichen Teils in dem gefährdeten Klemmbereich verringert wird. Der eigentliche Einklemmschutz kann dann gegebenenfalls das bewegliche Teil augenblicklich anhalten und eventuell die Bewegungsrichtung umkehren.

Bei diesem bekannten Verstellantrieb erfolgt die Reduzierung der Geschwindigkeit in Stufen, d. h. es wird von einer hohen Stufe in einem Schritt auf eine niedrige Stufe der Schließgeschwindigkeit umgeschaltet. Dadurch kann bei dieser abrupt erfolgenden Herunterschaltung der Einklemmschutz fälschlicherweise ansprechen und zum anderen wird dadurch die Schließzeit verlängert.

Mit der EP-A-0697305 ist entsprechend dem Oberbegriff des Anspruchs 1, ein Steuersystem für ein Motor bekannt geworden, der ein Kraftfahrzeug-Teil von einer ersten Position in eine zweite bewegt. Aus den Signalen der Bewegung des Motors wird die Position des Teils abgeleitet. Die Kommutierungsimpulse des Motors werden zur Bestimmung des die Belastung anzeigenden Motorstroms herangezogen. Anhand des Stromverlaufs wird auf eine Blockierung der Vorrichtung geschlossen und ein Stillsetzen des Motors eingeleitet. Die Vorrichtung enthält eine" Soft-Stop"-Funktion, um beim Auftreten eines Hindernisses in einem vorgegebenen Bereich den Motor rasch stillsetzen zu können. Hierzu wird die Geschwindigkeit des Teils ab einer vorgegebenen Position reduziert, jedoch ist durch die unterschiedlichen Randbedingungen des Systems nicht ausgeschlossen, dass das Teil an einer definiert vorgegebenen Position eine vorgegebene Maximalgeschwindigkeit überschreitet. Dieser Nachteil wird mit dem erfindungsgemäßen Verstellantrieb behoben.

### Vorteile der Erfindung

Der erfindungsgemäße Verstellantrieb mit Einklemmschutz mit den kennzeichnenden Merkmalen des Anspruchs 1 hat demgegenüber den Vorteil des kontinuierlichen Übergangs von einer hohen auf eine bestimmte niedrige Schließgeschwindigkeit bei optimierter Schließzeit. Ein fälschliches Ansprechen des Einklemmschutzes wird mit Sicherheit vermieden.

Gemäß der Erfindung wird dies prinzipiell dadurch erreicht, daß in bestimmten Verstellbereichen innerhalb eines vorgegebenen Positionsbereichs vor Erreichen der Geschlossen"-Position die Drehzahl und/oder die Leistung des Antriebs nach einem vorgegebene mathematischen Funktion gegenüber dem Positionsbereich abgesenkt wird, daß die Absenkung auf eine Minimaldrehzahl bzw. Minimalleistung an einer von bestimmten Zülposition vor der "Geschlossen"-Position erreicht wird, und daß die Minimaldrehzahl bzw. Minimalleistung im wesentlichen konstant ist. Die Absenkung der Drehzahl und/oder der Leistung des Antriebs kann nach einem beliebig wählbaren funktionalen Zusammenhang vorgegeben werden. Dadurch lassen sich weiche Übergänge realisieren.

Durch die in den weiteren Ansprüchen niedergelegten Maßnahmen sind vorteilhafte Weiterbildungen und Verbesserungen der im Anspruch 1 angegebenen Anordnung möglich. Bei einer vorteilhaften Ausführungsform des erfindungsgemäßen Verstellantriebs erfolgt die Drehzahlabsenkung linear. Der Aufwand für die Stützstellenermittlung ist gering.

Einer weiteren vorteilhaften Ausgestaltung liegt eine Absenkung nach einer Exponentialfunktion zugrunde. Dadurch können abrupte Drehzahl- und/oder Leistungsänderungen vermieden werden.

Entsprechend einer besonders vorteilhaften Ausführungsform der Erfindung erfolgt die Absenkung nach einem vorgegebenen funktionalen Zusammenhang auf die Minimaldrehzahl bzw. Minimalleistung über einen konstanten Positionsbereich, wobei sich die Absenkungsgeschwindigkeit in Abhängigkeit von der aktuellen Versorgungsleistung, insbesondere der Versorgungsspannung, ändert.

Entsprechend einer besonders vorteilhaften weiteren alternativen Ausführungsform der Erfindung erfolgt die Absenkung auf die Minimaldrehzahl bzw. Minimalleistung über einen variablen Positionsbereich, wobei sich dessen Startpunkt in Abhängigkeit von der jeweils aktuellen Versorgungsleistung, insbesondere der Versorgungsspannung, ändert.

In besonders zweckmäßiger Ausgestaltung der Erfindung wird die notwendige Minimaldrehzahl bzw. Minimalleistung empirisch derart ermittelt, daß unter allen Bedingungen, wie insbesondere Temperatur und Feuchtigkeit, noch ausreichend hohe Schließkräfte gewährleistet sind.

In vorteilhafter Ausgestaltung der Erfindung erfolgt die Steuerung der Drehzahl bzw. der Leistung des vorzugsweise elektrischen Antriebs durch Halbleiterbauelemente, insbesondere Linearregler oder Taktregler mit variablem Puls-Pausen-Verhältnis.

In besonders zweckmäßiger Weiterbildung der Erfindung ist vorgesehen, daß der Verstellantrieb zusammen mit einer Schaltung für den Schutz gegen Einklemmen von Fremdkörpern zwischen bewegtem Teil und festem Anschlag in der "Geschlossen"-Position einsetzbar ist.

Entsprechend einer vorteilhaften Ausgestaltung dieser Weiterbildung der Erfindung ist bei der Berechnung der Drehzahlabsenkung durch Einklemmvorgänge die jeweils bekannte Steigung der Absenkung nach einem vorgegebenen funktionalen Zusammenhang von Drehzahl und/oder Leistung des Antriebs als Korrekturfaktor berücksichtigbar.

In besonders zweckmäßiger Ausgestaltung davon ist zur Korrektur ein adaptiver Speicher vorgesehen, in welchem die gesteuerte Absenkung von Drehzahl und/oder Leistung als geringfügige Schwergängigkeit gespeichert ist.

Entsprechend einer weiteren vorteilhaften Ausgestaltung des erfindungsgemäßen Verstellantriebs ist zur Verbesserung der Auswertung beim Einklemmschutz die Auflösung bei der Wegerfassung erhöht durch Verwendung eines EXOR-Glieds zwischen zwei Hallsensoren und/oder durch Verwendung eines mehrfach polarisierten Magnetringes. Eine weitere vorteilhafte Ausgestaltung der Erfindung sieht vor, daß die Drehzahl und/oder Leistung bei Erreichen einer sehr geringen lichten Weite, z. B. < 4mm, wieder auf größtmöglichen Wert heraufsetzbar ist, um maximale schließkraft zu erreichen, insbesondere im Bereich von Dichtgummis.

### Zeichnung

Die Erfindung ist anhand mehrerer in de rZeichnung dargestellter Ausführungsbeispiele in der nachfolgenden Beschreibung näher erläuteert. Es zeigen:
- Figur 1: schematisch ein Diagramm einer ersten Ausführungsform des erfindungsgemäßen Verstellantriebs mit Einklemmschutz, bei welcher eine lineare Geschwindigkeitsabsenkung über einen konstanten Positionsbereich bei unterschiedlicher Änderung der Geschwindigkeit erfolgt, und
- Figur 2: schematisch ein Diagramm einer zweiten Ausführungsform des erfindungsgemäßen Verstellantriebs mit Einkelmmschutz, bei welcher eine lineare Geschwindigkeitsabsenekung über einen variablen Positionsbereich bei konstanter Änderung der Geschwindigkeit erfolgt.

### Beschreibung der Ausführungsbeispiele

Der erfindungsgemäße Verstellantrieb zeichnet sich durch eine Absenkung der Drehzahl und/oder der Leistung nach einem vorgegebenen funktionalen Zusammenhang aus.

Der vorgegebene funktionale Zusammenhang umfaßt das gesamte Spektrum kontinuierlicher oder diskreter mathematischer Funktionen. Neben dem später anhand des Ausführungsbeispiels beschriebenem linearen Verlauf bietet sich eine Absenkung gemäß einer e-Funktion an. Dadurch lassen sich Beschleunigungs- bzw. Abbremsvorgänge realisieren, die einen sanften Übergang zwischen den beiden Drehzahl- und/oder Leistungsstufen gewährleisten. Dies läßt sich auch durch eine Absenkung nach einer Sinus-, Kosinus- oder Tangensfunktion und deren Umkehrfunktionen erreichen. Polynome n-ten Grades verhindern ebenfalls einen abrupten Übergang, wodurch sich das Risiko des Verklemmens der Scheibe reduziert. Stellvertretend für die hier beschriebenen funktionalen Zusammenhänge bezieht sich das Ausführungsbeispiel auf eine lineare Absenkung. Die Erläuterungen hierzu lassen sich auf beliebige Funktionen übertragen.

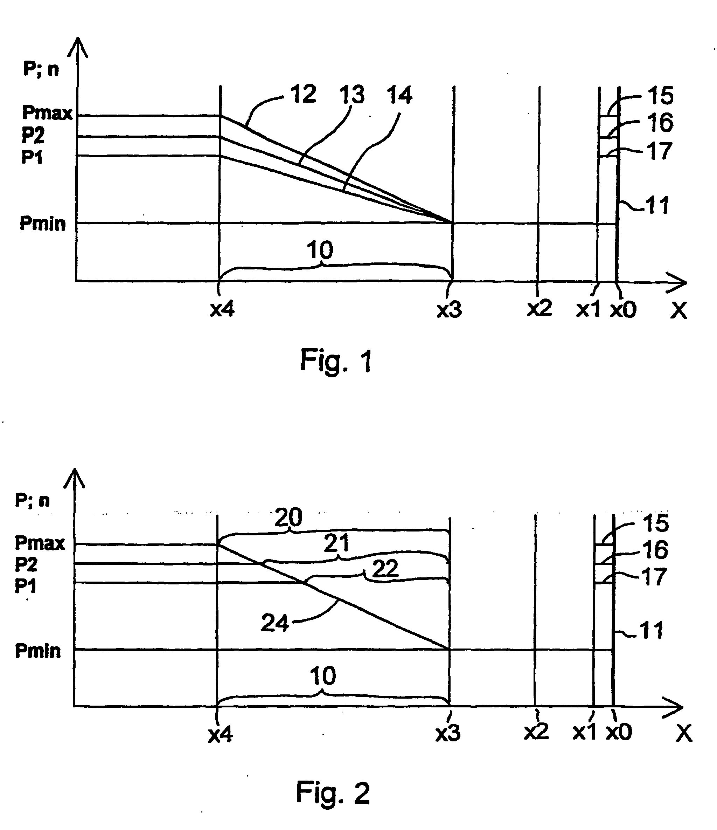

In Figur 1 ist in einem Diagramm schematisch der Geschwindigkeitsverlauf einer ersten Ausführungsform des erfindungsgemäßen Verstellantriebs mit Einklemmschutz dargestellt. Bei dieser Ausführungsform erfolgt eine lineare Geschwindigkeitsabsenkung über einen konstanten Positionsbereich 10 bei unterschiedlicher Änderung der Geschwindigkeit des bewegten Teil bzw. der Drehzahl n des verwendeten Motors, der vorzugsweise ein elektrischer Motor ist. Auf der vertikalen Achse ist die Leistung P bzw. die Drehzahl n des Verstellantriebs aufgezeichnet. Auf der horizontalen Achse ist der Weg x aufgezeichnet, der von dem angetriebenen beweglichen Teil bis zum durch den starken senkrechten Strich 11 dargestellten festen Anschlag in der Geschlossen"-Position in dem im Rahmen vorliegender Erfindung interessierenden Bereich der Gefahr von Einklemmen zurückgelegt wird, und zwar bis zur Position x0.

Gemäß der Ausführungsform wird die Leistung P bzw. die Drehzahl n linear in einem bestimmten Positionsbereich, nämlich zwischen x4 und x3, vor Erreichen der Geschlossen"-Position x0 auf einem Minimalwert pₘᵢₙ bzw. nₘᵢₙ abgesenkt. Es erfolgt also eine Art Zielabbremsung auf die Position x3 hin, bei welcher der Minimalwert erreicht sein soll. Dieser minimale Wert wird dann bis zum Erreichen der "Geschlossen"-Position konstant gehalten. Er ist dabei so groß, daß ein sicheres Einfahren bis zu x0 ermöglicht ist. Dieser minimale Wert wird bei jedem System, bei dem die Erfindung eingesetzt wird, in zweckmäßiger Weise unter Beachtung der jeweiligen Gegebenheiten empirisch ermittelt. Dieser minimale Wert wird so groß gewählt, daß ein sicheres Einfahren in die "Geschlossen"-Position x0 unter allen Umständen möglich ist, also z. B. auch bei Berücksichtigung von unterschiedlicher Temperatur und Feuchte.

Bei der Ausführungsform, die in Figur 1 dargestellte ist, hat der bestimmte Positionsbereich 10, innerhalb dessen die Absenkung erfolgt, eine konstante Länge x4 - x3, und die Absenkung von Leistung P und/oder Drehzahl n erfolgt mit unterschiedlicher Steigung entsprechend den Geraden 12, 13 und 14. Die lineare Absenkung ist bei Erreichen einer bestimmten Position, nämlich x3, beendet. Dann ist ein minimaler Wert für Leistung Pₘᵢₙ und/oder Drehzahl nₘᵢₙ erreicht. Bei der Geraden 12 ist die Steigung am größten, damit ist auch die Absenkungsgeschwindigkeit der Leistungs- bzw. Drehzahlverminderung am größten. Diese Gerade 12 startet bei Position x4 von maximaler Leistung Pₘₐₓ, was beispielsweise bei einem Kraftfahrzeug der maximalen Versorgungsspannung der Batterie entsprechen kann. Bei der Geraden 13 ist die Steigung geringer als bei der Geraden 12, damit ist auch die Absenkungsgeschwindigkeit der Leistungs- bzw. Drehzahlverminderung geringer. Diese Gerade 13 startet bei Position x4 von einer geringeren Leistung P2, was beispielsweise bei einem Kraftfahrzeug einer Versorgungsspannung der Batterie entsprechen kann, die unter der maximalen liegt. Bei der Geraden 14 ist die Steigung wiederum kleiner und damit ist auch die Absenkungsgeschwindigkeit der Leistungs- bzw. Drehzahlverminderung wiederum kleiner. Diese Gerade 14 startet ebenfalls bei Position x4, aber von einer Leistung P1, die beispielsweise bei einem Kraftfahrzeug einer noch niedrigeren Versorgungsspannung der Batterie entspricht. Die minimale Leistung Pₘᵢₙ kann mit der minimal zulässigen Versorgungsspannung einhergehen. Die lineare Absenkung erfolgt also derart, daß unabhängig von der aktuellen Versorgungsleistung immer bei einer bestimmten Position, nämlich x4, begonnen wird. Bei einer festen Position, nämlich x3, ist die Absenkung auf den minimalen Wert beendet. Bei dieser Ausführungsform wird die unterschiedliche aktuelle Versorgungsleistung durch die unterschiedliche Steigung der Geraden 12, 13, 14 berücksichtigt, oder mit anderen Worten durch variable Änderungsgeschwindigkeit der Absenkung.

Bei der Ausführungsform, deren Diagramm schematisch in Figur 2 dargestellt ist, erfolgt in dem bestimmten Positionsbereich 10, nämlich zwischen Position x4 und x3, die lineare Absenkung auf die Minimaldrehzahl nₘᵢₙ bzw. Minimalleistung Pₘᵢₙ über variable Absenkungsstrecken, wobei sich deren Startpunkte in Abhängigkeit von der aktuellen Versorgungsleistung, insbesondere der Versorgungsspannung, ändern. Die Steigung der Geraden 24 ist konstant, was einer konstanten Änderungsgeschwindigkeit der Absenkung entspricht. Entsprechend der unterschiedlich hohen Versorgungsleistung, insbesondere der Versorgungsspannung einer Kraftfahrzeugbatterie, ändert sich der Startpunkt für den Beginn der jeweiligen Absenkung. Da die Absenkung bei Position x3 jeweils beendet ist, ist die mit 20 bezeichnete Absenkungsstrecke bei maximaler Versorgungsleistung Pₘₐₓ am längsten. Kürzer ist entsprechend der geringeren Leistung P2 die zugehörige Absenkungsstrecke 21. Noch kürzer ist die mit 22 bezeichnete Absenkungsstrecke entsprechend der gegenüber P2 noch kleineren Versorgungsleistung P1. Bei dieser Ausführungsform wird die unterschiedliche aktuelle versorgungsleistung durch die variable Länge der Absenkungsstrecken 20, 21, 22 bei konstanter Änderungsgeschwindigkeit der Absenkung berücksichtigt.

Der erfindungsgemäß gestaltete Verstellantrieb wird zweckmäßigerweise zusammen mit einer Schaltung für den Schutz gegen Einklemmen von Fremdkörpern zwischen bewegtem Teil und festem Anschlag, in den Figuren mit 11 bezeichnet, in der "Geschlossen"-Position x0 eingesetzt. Die sich durch das erfindungsgemäße Absenken ergebenden Absenkungsgeschwindigkeiten sind klein gegenüber denjenigen, die bei den Einklemmvorgängen hervorgerufen werden. Dadurch wird der eigentliche Einklemmschutz, bei welchem die Schließbewegung sofort angehalten und ggf. die Drehrichtung umgekehrt wird, im wesentlichen unbeeinflußt gelassen. Da die Geradensteigung der Absenkung jeweils bekannt ist, kann dies bei der Berechnung der Drehzahlabsenkung durch Einklemmvorgänge mittels entsprechender Korrekturwerte berücksichtigt werden. Zur Korrektur kann insbesondere ein geeigneter adaptiver Speicher vorgesehen sein, in welchem selbst erlernte Schwergängigkeiten des Systems abgelegt werden. Die lineare gesteuerte Absenkung von Leistung und/oder Drehzahl gemäß der Erfindung wird in diesem Fall als geringfügige Schwergängigkeit gespeichert und abgelegt. Bei der Berechnung der Drehzahlabsenkung durch Einklemmen, dem Einklemmschutz, wird demgegenüber die lineare Drehzahlabsenkung herausgerechnet.

Bei dem erfindungsgemäßen Verstellantrieb erfolgt die Steuerung der Drehzahl bzw. der Leistung gemäß vorteilhafter Ausgestaltung durch Halbleiterbauelemente, insbesondere in Form eines Linearreglers oder eines Taktreglers mit variablem Puls-Pausen-Verhältnis. Als Antriebsmotor wird dabei vorzugsweise ein elektrischer Antriebsmotor verwendet.

In weiterer Ausgestaltung der Erfindung kann eine zusätzliche Verbesserung bei der Einklemmschutz-Auswertung dadurch erreicht werden, daß eine erhöhte Auflösung bei der Wegerfassung Anwendung findet. Dies kann unter Verwendung eines EXOR-Glieds zwischen zwei Hallsensoren, welche 90° phasenverschobene Positionssignale der Motorwelle abgeben, geschehe, wodurch eine Verdopplung der Weggenauigkeit erreichbar ist. Es kann aber auch zusammen mit oder alternativ mittels eines mehrfach polarisierten Magnetrings erfolgen.

Der erfindungsgemäße Verstellantrieb wird insbesondere für das Öffnen und Schließen von Fenstern und der Schiebedächern von Kraftfahrzeugen eingesetzt. Dabei können die in Figur 1 und 2 angegebenen Positionswerte für x4 ≈ 500 mm, für x3 ≈ 50 mm, für x2 ≈ 25 mm und für x1 ≈ 4 mmm vor der Geschlossen"-Position x0 betragen. Die Position x2 mit ca. 25 mm bedeutet für manche Anwendungen denjenigen Wert, bei dem auf jeden Fall die kinematische Energie auf einen derartigen noch zulässigen Wert abgesenkt sein muß, daß die Einklemmkräfte einen bestimmten Wert unterschreiten, beispielsweise kleiner als 100N sind, wobei die Kräfte an elastischen Stäben gemessen werden, deren Federrate 65N/mm beträgt. Aus diesem Grund ist der Wert für x3 mit ≈ 50 mm gewählt, damit die Absenkung von Drehzahl und/oder Leistung auf den Minimalwert auf jeden Fall auch unter ungünstigsten Bedingungen bei diesem vorgegebenen Grenzwert erreicht ist. Bei einer lichten Weite von weniger als etwa 4 mm, d. h. zwischen Position x1 und x0, im sog. Dichtgummibereich, kann die Leistung P bzw. die Drehzahl n wieder auf die volle Leistung hochgefahren werden, um maximale Schließkräfte zu erhalten. Dies ist in beiden Figuren durch die Bezugszeichen 15, 16, 17 angegeben, welche den jeweils aktuellen Leistungen Pₘₐₓ, P2 und p1 entsprechend zugeordnet sind.

Durch die gemäß der Erfindung nach einem vorgegebenen funktionalen Zusammenhang gestaltete Absenkung der Geschwindigkeit des Verstellantriebs auf einen Minimalwert von Leistung und/oder Drehzahl ist die Änderungsgeschwindigkeit bekannt und vorhersehbar. Diese Absenkung erfolgt entweder über einen konstanten Bereich hinweg mit einer der Versorgungsleistung entsprechenden variablen Steigung oder mit einer der Versorgungsleistung entsprechenden variablen Länge bzw. Dauer. In jedem Fall wird optimiert auf einen Zielpunkt hin auf den Minimalwert abgesenkt. Die durch die erfindungsgemäß vorgenommene Absenkung von Leistung und/oder Drehzahl hervorgerufene Drehzahländerung ist gegenüber der durch Einklemmvorgänge hervorgerufene gering. Bei Kombination mit einer Schaltung zum Einklemmschutz ist damit die Voraussetzung gegeben, daß wegen der bekannten Änderungsgeschwindigkeit, der Einklemmschutz davon im wesentlichen unbeeinflußt optimal und unabhängig wirksam ist.

## Patentansprüche

1. Verstellantrieb mit Einklemmschutz für bewegliche Teile, wie insbesondere Fenster und Schiebedächer in Kraftfahrzeugen, bei dem zur Erfüllung einer vorgegebenen Federrate eine Drehzahl- bzw. Geschwindigkeitsreduzierung des Antriebs zwecks Herabsetzung der kinematischen Energie vorgesehen ist, **dadurch gekennzeichnet, daß**
- in bestimmten Verstellbereichen (x3-xl) innerhalb eines vorgegebenen Positionsbereichs (10, 20, 21, 22) vor Erreichen der "Geschlossen"-Position (x0) die Drehzahl (n) und/oder die Leistung (P) des Antriebs nach einer vorgegebenen mathematischen Funktion gegenüber dem Positionsbereich abgesenkt wird,
- die Absenkung auf eine vorbestimmte Minimaldrehzahl bzw. Minimalleistung an einer vorbestimmten Zielposition (x3) vor der "Geschlossen"-Position (x0) erreicht wird,
- und die Minimaldrehzahl bzw. Minimalleistung im wesentlichen konstant ist.

2. Verstellantrieb nach Anspruch 1, **dadurch gekennzeichnet, daß** die Absenkung nach einer vorgegebenen mathematischen Funktion auf die Minimaldrehzahl bzw. Minimalleistung über einen konstanten Positionsbereich (10) erfolgt, wobei sich die Absenkungsgeschwindigkeit (12, 13, 14) in Abhängigkeit von der aktuellen Versorgungsleistung (Pmax, P2, P1), insbesondere der Versorgungsspannung, ändert.

3. Verstellantrieb nach Anspruch 1, **dadurch gekennzeichnet, daß** die Absenkung nach einer vorgegebenen mathematischen Funktion auf die Minimaldrehzahl (nₘᵢₙ) bzw. Minimalleistung (Pₘᵢₙ) über einen variablen Positionsbereich (20, 21, 22) erfolgt, wobei sich dessen Startpunkt in Abhängigkeit von der jeweils aktuellen Versorgungsleistung (Pₘₐₓ, P2, P1), insbesondere der Versorgungsspannung, ändert.

4. Verstellantrieb nach einem der Ansprüche 1 bis 3, **dadurch gekennzeichnet, daß** die Absenkung linear erfolgt.

5. Verstellantrieb nach einem der Ansprüche 1 bis 3, **dadurch gekennzeichnet, daß** die Absenkung nach dem Verlauf einer Exponentialfunktion erfolgt.

6. Verstellantrieb nach einem der vorigen Ansprüche, **dadurch gekennzeichnet, daß** die notwendige Minimaldrehzahl (nₘᵢₙ) bzw. Minimalleistung (Pₘᵢₙ) aufgrund von Versuchsdaten derart vorgegeben ist, daß unter allen Bedingungen, wie insbesondere Temperatur und Feuchtigkeit, noch ausreichend hohe Schließkräfte gewährleistet sind.

7. Verstellantrieb nach einem der vorigen Ansprüche, **dadurch gekennzeichnet, daß** die Steuerung der Drehzahl (n) bzw. der Leistung (P) des vorzugsweise elektrischen Antriebs durch Halbleiterbauelemente erfolgt, insbesondere Linearregler oder Taktregler mit variablem Puls-Pausen-Verhältnis.

8. Verstellantrieb nach einem der vorigen Ansprüche, **dadurch gekennzeichnet, daß** er zusammen mit einer Schaltung für den Schutz gegen das Einklemmen von Fremdkörpern zwischen dem bewegten Teil und einem festen Anschlag (11) in der "Geschlossen"-Position (x0) einsetzbar ist.

9. Verstellantrieb nach Anspruch 8, **dadurch gekennzeichnet, daß** bei der Berechnung der Drehzahlabsenkung durch Einklemmvorgänge die jeweils bekannte Steigung (12, 13, 14, 24) der Absenkung nach der vorgegebenen mathematischen Funktion von Drehzahl (n) und/oder Leistung (P) des Antriebs als Korrekturfaktor berücksichtigbar ist.

10. Verstellantrieb nach Anspruch 9, **dadurch gekennzeichnet, daß** zur Korrektur ein adaptiver Speicher vorgesehen ist, in welchem die gesteuerte Absenkung von Drehzahl (n) und/oder Leistung (P) als geringfügige Schwergängigkeit gespeichert ist.

11. Verstellantrieb nach einem der vorigen Ansprüche, **dadurch gekennzeichnet, daß** die Drehzahl (n) und/oder Leistung (P) bei Erreichen einer sehr geringen lichten Weite (x1 - x0), z. B. < 4 mm, wieder auf größtmöglichen Wert heraufsetzbar ist, um einen maximale Schließkraft zu erreichen, insbesondere im Bereich von Dichtgummis.

## Claims

1. Positioning drive with an anti-trapping system for moveable parts such as, in particular, windows and sliding roofs in motor vehicles, in the case of which in order to satisfy a prescribed spring rate a reduction in the rotational speed or speed of the drive is provided for the purpose of lowering the kinematic energy, **characterized in that**
- in specific positioning ranges (x3-x1) within a prescribed positional range (10, 20, 21, 22) before the "closed" position (x0) is reached, the rotational speed (n) and/or the power (P) of the drive is lowered by comparison with the positional range according to a prescribed mathematical function,
- the lowering to a predetermined minimum rotational speed or minimum power is achieved at a predetermined target position (x3) in front of the "closed" position (x0),
- and the minimum rotational speed or minimum power is substantially constant.

2. Positioning drive according to Claim 1, **characterized in that** the lowering to the minimum rotational speed or minimum power is performed over a constant positional range (10) according to a prescribed mathematical function, the lowering rate (12, 13, 14) changing as a function of the current supply power (Pmax, P2, P1), in particular the supply voltage.

3. Positioning drive according to Claim 1, **characterized in that** the lowering to the minimum rotational speed (nₘᵢₙ) or minimum power (Pₘᵢₙ) is performed over a variable positional range (20, 21, 22) according to a prescribed mathematical function, the starting point thereof changing as a function of the respective current supply power (Pₘₐₓ, P2, P1), in particular the supply voltage.

4. Positioning drive according to one of Claims 1 to 3, **characterized in that** the lowering is performed linearly.

5. Positioning drive according to one of Claims 1 to 3, **characterized in that** the lowering is performed according to the course of an exponential function.

6. Positioning drive according to one of the preceding claims, **characterized in that** the requisite minimum rotational speed (nₘᵢₙ) or minimum power (Pₘᵢₙ) is prescribed on the basis of empirical values in such a way that sufficiently high closing forces are still ensured under all conditions such as, in particular, temperature and moisture.

7. Positioning drive according to one of the preceding claims, **characterized in that** the rotational speed (n) or the power (P) of the preferably electric drive is controlled by semiconductor components, in particular linear controllers or clock controllers with a variable mark-to-space ratio.

8. Positioning drive according to one of the preceding claims, **characterized in that** it can be used in the "closed" position (x0) together with a circuit for protection against the trapping of foreign bodies between the moving part and a fixed stop (11).

9. Positioning drive according to Claim 8, **characterized in that** it is possible when calculating the lowering of the rotational speed owing to traping processes to take into account as correction factor the respectively known gradient (12, 13, 14, 24) of the lowering according to the prescribed mathematical function of the rotational speed (n) and/or power (P) of the drive.

10. Positioning drive according to Claim 9, **characterized in that** provided for correction is an adaptive memory in which the controlled lowering of rotational speed (n) and/or power (P) is stored as slight sluggishness.

11. Positioning drive according to one of the preceding claims, **characterized in that** the rotational speed (n) and/or power (P) can be lowered again to a maximum value upon the attainment of a very small clear width (x1-x0), for example < 4mm, in order to reach a maximum closing force, in particular in the region of rubber weatherseals.

## Revendications

1. Entraînement avec protection contre le pincement pour des pièces mobiles, telles que, en particulier, des fenêtres et des toits ouvrants dans des véhicules automobiles, dans lequel pour respecter un facteur de rappel prédéterminé, il est prévu une réduction du régime ou de la vitesse d'entraînement afin de réduire l'énergie cinétique,
**caractérisé en ce que**
- dans des zones de réglage données (x3-x1), à l'intérieur d'une zone de positions prédéterminée (10, 20, 21, 22), avant d'atteindre la position « fermée » (x0), la vitesse (n) et/ou la puissance (P) de l'entraînement est réduit par rapport à la zone de positions selon une fonction mathématique prédéterminée,
- la baisse jusqu'à une vitesse minimum prédéterminée ou jusqu'à une puissance minimum prédéterminée, au niveau d'une position cible prédéterminée (x3), est atteinte avant la position « fermée » (x0),
- et la vitesse minimum ou la puissance minimum est pour l'essentiel constant.

2. Entraînement selon la revendication 1,
**caractérisé en ce que**
la baisse selon une fonction mathématique prédéterminée jusqu'à une vitesse ou une puissance minimum se produit sur une zone de positions constante (10), la vitesse de baisse (12, 13, 14) variant en fonction de la puissance d'alimentation réel (Pmax, P2, P1), en particulier la tension d'alimentation.

3. Entraînement selon la revendication 1,
**caractérisé en ce que**
la baisse selon une fonction mathématique prédéterminée jusqu'à une vitesse minimum (nₘᵢₙ) ou une puissance minimum (Pₘᵢₙ) se produit sur une zone de positions variable (20, 21, 22), le point de démarrage variant en fonction de la puissance d'alimentation réel respectif (Pₘₐₓ, P2, P1), en particulier la tension d'alimentation.

4. Entraînement selon l'une des revendications 1 à 3,
**caractérisé en ce que**
la baisse se produit de façon linéaire.

5. Entraînement selon l'une des revendications 1 à 3,
**caractérisé en ce que**
la baisse se produit selon l'évolution d'une fonction exponentielle.

6. Entraînement selon l'une des revendications précédentes,
**caractérisé en ce que**
la vitesse minimum nécessaire (nₘᵢₙ) ou la puissance minimum nécessaire (Pₘᵢₙ) est prédéterminée en fonction de données de test, de telle sorte que dans toutes les conditions, telles que, en particulier, la température et l'humidité, une force de fermeture suffisante est garantie.

7. Entraînement selon l'une des revendications précédentes,
**caractérisé en ce que**
la commande de la vitesse (n), ou de la puissance (P) de l'entraînement de préférence électrique s'effectue par le biais de composants semiconducteurs, en particulier des régulateurs linéaires ou des régulateurs à impulsions ayant un rapport impulsion-pause variable.

8. Entraînement selon l'une des revendications précédentes,
**caractérisé en ce qu'**
il peut être utilisé conjointement avec un circuit pour la protection contre le pincement de corps étrangers entre la pièce mobile et une butée fixe (11) dans la position « fermée » (x0).

9. Entraînement selon la revendication 8,
**caractérisé en ce que**
lors du calcul de la baisse de vitesse par des processus de pincement, l'évolution respectivement connue (12, 13, 14, 24) de la baisse de vitesse (n) et/ou de puissance (P) de l'entraînement selon la fonction mathématique prédéterminée peut être prise en compte en tant que facteur de correction.

10. Entraînement selon la revendication 9,
**caractérisé en ce que**
pour la correction, il est prévu une mémoire adaptative dans laquelle la baisse commandée de vitesse (n) et/ou de puissance (P) est enregistrée comme accident de peu d'importance.

11. Entraînement selon l'une des revendications précédentes,
**caractérisé en ce que**
lorsque l'on atteint une très faible distance (x1 - x0), par exemple < 4 mm, la vitesse (n) et/ou la puissance (P) sont à nouveau parties à la valeur la plus élevée possible, afin d'obtenir une force de fermeture maximale, en particulier dans la zone du caoutchouc d'étanchéité.
